# EUROPÄISCHE PATENTSCHRIFT

(11) **EP 1 232 007 B1**
(45) Veröffentlichungstag und Bekanntmachung des Hinweises auf die Patenterteilung: **09.03.2005**
(21) Anmeldenummer: 00979553.5
(22) Anmeldetag: 10.11.2000
(51) Int. Cl.: B01J 29/04, C07D 301/12

(54) **VERFAHREN ZUR HERSTELLUNG EINES OXIDS**
PROCESS FOR THE PRODUCTION OF AN OXIDE
PROCEDE DE PRODUCTION D'UN OXYDE

(30) Priorität: 10.11.1999 DE 19954322
(43) Veröffentlichungstag der Anmeldung: 21.08.2002
(73) Patentinhaber: BASF AKTIENGESELLSCHAFT, 67056 Ludwigshafen (DE)
(72) Erfinder: CHEN, Yi, Nanjing 210093 (CN); DING, Weiping, Nanjing 210093 (CN); CHUN, Yuan, Nan Yuan 16, Nanjing 210093 (CN); MA, Lian, Shanghai 20005 (CN); MÜLLER, Ulrich, 67435 Neustadt (DE)
(74) Vertreter: Isenbruck, Günter, Dr.
(86) Internationale Anmeldenummer: PCT/EP2000/011165
(87) Internationale Veröffentlichungsnummer: WO 2001/034298

(56) Entgegenhaltungen:
- EP-A- 0 230 949
- EP-A- 0 568 336
- EP-A- 1 048 639
- WO-A-99/26936
- WO-A-99/28030
- US-A- 5 621 122

## Beschreibung

Die vorliegende Erfindung betrifft ein Verfahren zur Herstellung eines Oxids, das die Elemente Silicium und Titan umfaßt und weiterhin mindestens zwei verschiedene Siliciumdioxid-Phasen aufweist, wobei eine dieser Phasen nicht-kristallin und mindestens eine dieser Phasen eine kristalline Phase mit Zeolithstruktur ist, wobei das Oxid dadurch ausgezeichnet ist, daß es keine Silicium-Kohlenstoff Bindungen enthält.

Poröse oxidische Materialien werden in einer ganzen Reihe von technischen und großtechnischen Verfahren eingesetzt. Insbesondere zu erwähnen sind hierbei solche Oxide, die Zeolithstruktur aufweisen. Bevorzugte Einsatzgebiete sind beispielsweise katalytische Verfahren, in denen diese Materialien unter anderem als Katalysator verwendet werden.

Bei einigen dieser Verfahren ist es erforderlich, daß das oxidische Material, das aus bestimmten Herstellungsverfahren als acides Material gewonnen wird, in seiner Acidität abgestumpft wird. Gleichzeitig wird es angestrebt, daß das in seiner Acidität abgestumpfte Material ausreichend stabil ist, so daß diese Behandlung, die die Acidität beinflußt, nach einer Regeneration des oxidischen Materials nicht mehr wiederholt werden muß.

In der US 4,937,216 wird beispielweise ein Katalysator für die Epoxidation von Olefinen beschrieben, der einen synthetischen Zeolith der Formel xTiO₂(1-x)SiO₂ enthält. Die Oberfläche des zur Epoxidation verwendeten Katalysators weist hierbei Si-O-Si(R)₃-Gruppen auf, die aus einer Umsetzung eines Vorläufers des Katalysators mit Verbindungen der allgemeinen Struktur X-Si-(R)₃ resultieren. Nachteilig ist bei dieser Vorgehensweise, daß im eingesetzten Katalysator Si-C-Bindungen vorliegen, die die Stabilität insoweit negativ beeinflussen, daß nach einem oder mehreren Regenerationsschritten die Behandlung mit Verbindungen X-Si-(R)₃ wiederholt werden muß. Gerade die Regenerierung ist aber wesentlicher Bestandteil moderner katalytischer Verfahren, da die Wiederverwendung eines Katalysators aus ökonomischer und ökologischer Sicht erforderlich ist. Diese Regeneration wird allerdings durch ungenügend stabile Katalysatoren erschwert, wodurch die ökonomischen und ökologischen Vorteile wieder verloren gehen.

In der US 4,824,976 wird ein Verfahren zur Epoxidation von Olefinen offenbart, wobei hierbei diejenigen Katalysatoren eingesetzt werden, die schon in der oben diskutierten US 4,937,216 beschrieben sind. Selbstverständlich weist daher auch dieses Verfahren die oben erwähnten Nachteile auf.

Die WO 99/26936 offenbart ein Verfahren zur Herstellung eines Titan-haltigen Silicalit-Zeolithen mit einer Beschichtung hergestellt durch Silylierung. Als Silylierungsreagenzien können neben Verbindungen, die keine Silicium-Kohlenstoff-Bindungen enthalten, auch solche eingesetzt werden, die eine Silicium-Kohlenstoff-Bindung enthalten.

EP-A-1 048 639, veröffentlicht am 02.11.2000, offenbart ein Verfahren zur Herstellung eines Titan-haltigen Silicalit-Zeolithen mit einer Beschichtung hergestellt durch Silylierung. Als Silylierungsreagenzien können Verbindungen, die Silicium-Kohlenstoff-Bindungen enthalten, eingesetzt werden.

Bekannt ist auch, auf kristalline Titan-haltige Zeolithe nicht-kristallines Siliciumdioxid aufzubringen (US 5,621,122).

Die Aufgabe der vorliegenden Erfindung war es daher, ein weiteres Verfahren zur Herstellung eines Oxids enthaltend Silicium und Titan bereitzustellen.

Demgemäß betrifft die vorliegende Erfindung ein Verfahren zur Herstellung eines Oxids umfassend mindestens die Elemente Si und Ti, mindestens nicht-kristallines Siliciumdioxid und mindestens eine kristalline Silikatphase, die mindestens eine Zeolithstruktur aufweist, wobei nicht-kristallines Siliciumdioxid auf mindestens einer kristallinen Silikatphase, die mindestens eine Zeolithstruktur aufweist, aufgebracht ist, dadurch gekennzeichnet, dass
(a) ein oxidisches Material, umfassend mindestens die Elemente Si und Ti und mindestens eine kristalline Silikatphase, die mindestens eine Zeolithstruktur aufweist, hergestellt wird und
(b) das aus (a) erhaltene oxidische Material
   (i) in mindestens einem Lösungsmittel umgesetzt wird mit mindestens einem Silan oder mindestens einem Silanderivat oder mit einem Gemisch aus zwei oder mehr davon unter Erhalt einer Mischung, umfassend mindestens ein oxidisches Umsetzungsprodukt und das mindestens eine Lösungsmittel,
      aus der Mischung direkt im Anschluß an die Umsetzung das mindestens eine Lösungsmittel unter Erhalt des mindestens einen oxidischen Umsetzungsproduktes entfernt wird und
      direkt im Anschluß an die Entfernung des mindestens einen Lösungsmittels das mindestens eine oxidische Umsetzungsprodukt unter Erhalt des Oxides calciniert wird, oder
   (ii) in der Gasphase umgesetzt wird mit mindestens einem Silan oder mindestens einem Silanderivat oder mit einem Gemisch aus zwei oder mehr davon unter Erhalt mindestens eines oxidischen Umsetzungsproduktes und,
wobei das mindestens eine Silan oder das mindestens eine Silanderivat mindestens eine Silicium-Kohlenstoff-Bindung enthält, und direkt im Anschluß an die Umsetzung das mindestens eine oxidische Umsetzungsprodukt unter Erhalt des Oxides calciniert wird, so dass das Oxid keine Silicium-Kohlenstoff-Bindungen aufweist.

Erfindungsgemäß kann das Oxid eine oder mehrere kristalline Silikatphasen aufweisen, wobei jede dieser mindestens einen kristallinen Silikatphasen eine oder mehrere Zeolithstrukturen aufweisen kann. Dabei ist es nicht erforderlich, daß die mindestens eine Silikatphase ausschließlich in mindestens einer Zeolithstruktur vorliegt. Ebenso ist auch eine kristalline Silikatphase denkbar, die neben der mindestens einen Zeolithstruktur mindestens eine weitere kristalline Struktur, nicht zu den Zeolithstrukturen zählende Kristallstruktur aufweist.

Ebenso ist es auch denkbar, daß das Oxid mindestens eine Silikatphase aufweist, die mindestens eine Zeolithstruktur aufweist, sowie mindestens eine weitere Silikatphase, die kristallin ist und eine Struktur aufweist, die nicht zu den Zeolithstrukturen gezählt wird.

Zeolithe an sich sind bekanntermaßen kristalline Alumosilikate mit geordneten Kanal- und Käfigstrukturen, die Mikroporen aufweisen. Der Begriff "Mikroporen", wie er im Rahmen der vorliegenden Erfindung verwendet wird, entspricht der Definition in "Pure Appl. Chem." 57 (1985) S. 603-619, und bezeichnet Poren mit einem Porendurchmesser von kleiner 2 nm. Das Netzwerk solcher Zeolithe ist aufgebaut aus SiO₄- und AlO₄-Tetraedern, die über gemeinsame Sauerstoffbrücken verbunden sind. Eine Übersicht über die bekannten Strukturen findet sich beispielsweise bei W. M. Meier, D. H. Olson und Ch. Baerlocher in "Atlas of Zeolite Structure Types", Elsevier, 4. Auflage, London 1996.

Im besonderen existieren Zeolithe, die kein Aluminium enthalten und bei denen im Silikatgitter anstelle des Si(IV) teilweise Titan als Ti(IV) vorhanden ist. Die Titanzeolithe, insbesondere solche mit einer Kristallstruktur vom MFI-Typ, sowie Möglichkeiten zu ihrer Herstellung sind beschrieben beispielsweise in der EP-A 0 311 983 oder der EP-A 0 405 978.

Titanzeolithe mit MFI-Struktur sind dafür bekannt, daß sie über ein bestimmtes Muster bei der Bestimmung ihrer Röntgenbeugungsaufriahmen sowie zusätzlich über eine Gerüstschwingungsbande im Infrarotbereich (IR) bei etwa 960 cm⁻¹ identifiziert werden können und sich damit von Alkalimetalltitanaten oder kristallinen und amorphen TiO₂-Phasen unterscheiden.

Dabei sind im einzelnen Titan-, Germanium-, Tellur-, Vanadium-, Chrom-, Niob-, Zirkoniumhaltige Zeolithe mit Pentasil-Zeolith-Struktur, insbesondere die Typen mit röntgenografischer Zuordnung zur ABW-, ACO-, AEI-, AEL-, AEN-, AET-, AFG-, AFI-, AFN-, AFO-, AFR-, AFS-, AFT-, AFX-, AFY-, AHT-, ANA-, APC-, APD-, AST-, ATN-, ATO-, ATS-, ATT-, ATV-, AWO-, AWW-, BEA-, BIK-, BOG-, BPH-, BRE-, CAN-, CAS-, CFI-, CGF-, CGS-, CHA-, CHI-, CLO-, CON-, CZP-, DAC-, DDR-, DFO-, DFT-, DOH-, DON-, EAB-, EDI-, EMT-, EPI-, ERI-, ESV-, EUO-, FAU-, FER-, GIS-, GME-, GOO-, HEU-, IFR-, ISV-, ITE-, JBW-, KFI-, LAU-, LEV-, LIO-, LOS-, LOV-, LTA-, LTL-, LTN-, MAZ-, MEI-, MEL-, MEP-, MER-, MFI-, MFS-, MON-, MOR-, MSO-, MTF-, MTN-, MTT-, MTW-, MWW-, NAT-, NES-, NON-, OFF-, OSI-, PAR-, PAU-, PHI-, RHO-, RON-, RSN-, RTE-, RTH-, RUT-, SAO-, SAT-, SBE-, SBS-, SBT-, SFF-, SGT-, SOD-, STF-, STI-, STT-, TER-, THO-, TON-, TSC-, VET-, VFI-, VNI-, VSV-, WIE-, WEN-, YUG-, ZON-Struktur sowie zu Mischstrukturen aus zwei oder mehr der vorgenannten Strukturen. Denkbar sind für den Einsatz im erfindungsgemäßen Verfahren weiterhin titanhaltige Zeolithe mit der Struktur des ITQ-4, SSZ-24, TTM-1, UTD-1, CIT-1 oder CIT-5. Als weitere titanhaltige Zeolithe sind solche mit der Struktur des ZSM-48 oder ZSM-12 zu nennen.

Als besonders bevorzugt sind für das erfindungsgemäße Verfahren Ti-Zeolithe mit MFI-, MEL- oder MFUMEL-Mischsitulctur anzusehen. Als weiter bevorzugt sind im einzelnen die Ti-enthaltenden Zeolith-Katalysatoren, die im allgemeinen als "TS-1", "TS-2", "TS-3" bezeichnet werden, sowie Ti-Zeolithe mit einer zu β-ZeoIith isomorphen Gerüststruktur zu nennen.

Das Oxid kann weiterhin titanhaltige Zeolithe mit der Struktur des UTD-1, CIT-1, CIT-5, MCM-22 oder MCM-61 umfassen. Als weitere titanhaltige Zeolithe sind solche mit der Struktur des ZSM-48 oder ZSM-12 zu nennen. Derartige Zeolithe sind unter anderem in der US-A 5 430 000 und der WO 94/29408 beschrieben, deren diesbezüglicher Inhalt vollumfänglich in die vorliegende Anmeldung durch Bezugnahme aufgenommen wird. Als besonders bevorzugt sind im Rahmen der vorliegenden Erfindung Ti-Zeolithe mit MFI-, MEL- oder MFI/MEL-Mischsrruktur anzusehen. Als ebenfalls bevorzugt sind auch Ti-Zeolithe mit einer zu β-Zeotith isomorphen Gerüsβuuktur zu nennen.

Außer Silicium und Titan kann die mindestens eine kristalline Silikatphase mit mindestens einer Zeolithstruktur auch zusätzliche Elemente wie z.B. Aluminium, Zirkon, Vanadium, Zinn, Zink, Eisen, Tellur, Niob, Tantal, Chrom, Kobalt, Nickel, Gallium, Germanium, Bor oder geringe Mengen an Fluor enthalten.

Daher betrifft die vorliegende Erfindung auch ein Verfahren zur Herstellung eines Oxids, wie oben beschrieben, dadurch gekennzeichnet, daß das Oxid mindestens eines der Elemente aus der Gruppe bestehend aus Al, B, Fe, Ga, V, Zr, Ge, Sn, Zn, Te, Nb, Ta und Cr, umfaßt.

Unter anderem ist es hierbei denkbar, daß die bereits oben beschriebene, mindestens eine kristalline Phase, die mindestens eine Zeolithstruktur aufweist, eines oder mehrere dieser Elemente umfaßt. Insbesondere ist es bei dieser Ausführungsform denkbar, daß eines oder mehrere dieser Elemente in der mindestens einen Zeolithstruktur selbst enthalten sind. Selbstverständlich ist es aber auch möglich, daß in dem Fall. daß diese kristalline Phase neben der mindestens einen Zeolithstruktur mindesten eine weitere kristalline Struktur, die nicht zu den Zeolithstrukturen gezählt wird, aufweist, mindestens eine dieser weiteren Strukturen mindestens eines dieser Elemente umfaßt. Selbstverständlich können eines oder mehrere dieser Elemente sowohl in mindestens einer der Zeolithstrukturen als auch in mindestens einer der weiteren kristallinen Strukturen, die nicht zu den Zeolithstrukturen gezählt werden, enthalten sein. Irgendzwei der im Oxid enthaltenen kristallinen Strukturen können natürlich gleiche oder auch verschiedene der oben aufgeführten Elemente aufweisen.

In einer weiteren Ausführungsform des Oxides können eines oder mehrere dieser Elemente auch vollständig oder teilweise in einer oder mehreren weiteren Komponenten des Oxides enthalten sein, die weder kristalline noch nicht-kristalline Silikatphasen sind.

Im allgemeinen ist es denkbar, daß das vom Oxid umfaßte Titan entweder in der mindestens einen nicht-kristallinen Silikatphase oder einer kristallinen Silikatphase, deren Struktur nicht zu den Zeolithstrukturen gezählt wird, oder in einer oder mehreren weiteren Komponenten des Oxides oder in zwei oder mehr davon enthalten ist. In den oben beschriebenen Zeolithstrukturen kann das Titan demgemäß teilweise oder auch vollständig durch beispielsweise Vanadium, Zirkonium, Chrom, Niob oder Eisen oder durch ein Gemisch aus zwei oder mehr davon ersetzt sein. Das molare Verhältnis von Titan und/oder Vanadium, Zirkonium, Chrom, Niob oder Eisen zur Summe aus Silicium und Titan und/oder Vanadium, Zirkonium, Chrom, Niob oder Eisen liegt dabei in der Regel im Bereich von 0,01:1 bis 0.1:1.

Bevorzugt weist das Oxid mindestens eine kristalline Silikatphase mit Zeolithstruktur auf, die neben Si und O auch Ti enthält. Selbstverständlich umfaßt die vorliegende Erfindung hierbei auch Ausführungsformen des Oxids, bei denen mindestens eine kristalline Silikatphase mit Zeolithstruktur neben Si und O auch Ti enthält und ebenso mindestens ein weiterer Bestandteil des Oxides, wie beispielsweise eine kristalline Silikatphase, deren Struktur nicht zu den Zeolithstrukturen gerechnet wird, oder mindestens eine nicht-kristalline Sililkatphase oder eine oder mehrere andere Komponenten des Oxides oder zwei oder mehr dieser Bestandteile Ti enthalten.

Vorzugsweise umfaßt das Oxid Titan-, Vanadium-, Chrom-, Niob-, Zirkonium-Zeolithe, weiter bevorzugt Titan-Zeolithe und insbesondere Titansilicalite.

Was die Porenstruktur der mindestens einen kristallinen Silikatphase mit Zeolithstruktur anbelangt, so existieren diesbezüglich keine besonderen Beschränkungen. So sind Strukturen mit Mikroporen, mit Mesoporen oder mit Makroporen oder mit Mikro- und Mesoporen oder mit Mikro- und Makroporen oder mit Mikro- und Meso- und Makroporen denkbar, wobei die Definition dieser Poren im Rahmen der vorliegenden Erfindung der Definition in "Pure. Appl. Chem." 45, S. 71 ff. entspricht und Mikroporen mit einem Durchmesser von kleiner oder gleich 2 nm, Mesoporen mit einem Durchmesser von größer 2 nm bis ungefähr 50 nm und Makroporen mit einem Durchmesser von größer als 50 nm charakterisiert.

Sollte das Oxid mindestens eine weitere kristalline Silikatphase aufweisen, deren Struktur nicht zu den Zeolithstrukturen gezählt wird, so trifft für diese Silikatphase hinsichtlich der Porenstruktur selbstverständlich das für die kristalline Silikatphase Gesagte zu. Auch auf gegebenfalls im Oxid vorliegende weitere poröse Komponenten, die weder kristalline noch nicht-kristalline Silikatphasen sind, trifft hinsichtlich der Porenstruktur das für die kristalline Silikatphase Gesagte zu.

Hierbei ist es beispielsweise denkbar, daß das Oxid eine mesostivktutierte Oxidphase umfaßt, die nicht-kristallin ist, aber dennoch ein Ordnungsprinzip aufweist. Solche mesostrukturierten Oxide sind beispielweise in der DE-A 196 39 016 beschrieben, die diesbezüglich durch Bezugnahme in den Kontext der vorliegenden Anmeldung einbezogen wird.

Was das Herstellungsverfahren des Oxides anbelangt, so exisitieren im wesentlichen keine Beschränkungen, solange aus diesem Verfahren das Oxid erhalten wird. Das Oxid wird in einem Verfahren hergestellt, in dem ein geeignetes oxidisches Material, das mindestens eine kristalline Silikatphase mit Zeolithstruktur aufweist, mit einem geeigneten Silan oder Silanderivat behandelt wird, wie es in Ansprüch 1 definiert ist.

Der Begriff "direkt im Anschluß", wie er im Rahmen der vorliegenden Erfindung benutzt wird, bedeutet, daß zwischen einem ersten Verfahrensschritt und einem weiteren Verfahrensschritt, der direkt im Anschluß an diesen ersten Verfahrensschritt erfolgt, kein anderer Verfahrensschritt erfolgt, aufgrund dessen die ein oder mehreren Produkte, die aus dem ersten Verfahrensschritt resultieren, beeinflußt werden. Insbesondere umfaßt daher der Begriff "direkt im Anschluß", wie er im Rahmen der vorliegenden Erfindung benutzt wird, eine Verfahrensführung, in dem der erste Verfahrensschritt und der direkt im Anschluß an diesen ersten Verfahrensschritt erfolgende Verfahrensschritt kontinuierlich ineinander übergehen und zusammen einen einzigen Verfahrensschritt darstellen.

In diesem erfindungsgemäßen Verfahren wird mindestens eine nicht-kristalline Silikatphase durch Behandlung des oxidischen Ausgangsmaterials auf mindestens eine kristalline Silikatphase mit Zeolithstruktur aufgebracht. Selbstverständlich sind hiermit auch solche Ausführungsformen des Verfahrens umfaßt, in dem das oxidische Ausgangsmaterial neben der mindestens einen kristallinen Silikatphase mit Zeolithstruktur weitere Bestandteile wie beispielsweise eine oder mehrere kristalline Silikatphasen mit Strukturen, die nicht zu den Zeolithstrukturen gezählt werden, oder mindestens eine nicht-kristalline Silikatphase oder eine oder mehrere weitere Komponenten aufweist, solange gewährleistet ist, daß durch das Verfahren eine nicht-kristalline Silikatphase auf mindestens einer kristallinen Silikatphase mit Zeolithstruktur aufgebracht wird.

Im vorliegenden Verfahren wird gemäß (a) ein oxidisches Material hergestellt, das einen Titanzeolithen umfaßt. Was die Herstellung dises Materials anbelangt, so sind prinzipiell alle geeigneten Verfahren denkbar. Typischerweise stellt man die vorgenannten Titanzeolithe dadurch her, daß man ein wäßriges Gemisch aus einer SiO₂-Quelle, einem Titanoxid und einer stickstoffhaltigen organischen Base, wie z.B. Tetrapropylammoniumhydroxid, gegebenenfalls noch in Gegenwart von Alkalilauge, in einem Druckbehälter unter erhöhter Temperatur mehrere Stunden oder wenige Tage lang umsetzt, wobei ein kristallines Produkt erhalten wird. Dieses wird in der Regel abfiltriert, gewaschen, getrocknet und zur Entfernung der stickstoffhaltigen organischen Base bei erhöhter Temperatur calciniert. In dem so erhaltenen Pulver liegt das Titan zumindest teilweise innerhalb des Zeolithgerüsts in wechselnden Anteilen mit vier-, fünf- oder sechsfacher Koordination vor (Behrens et al., J. Chem. Soc., Chem. Commun. 1991, S. 678 - 680). Daran kann sich noch eine mehrmalige Waschbehandlung mit schwefelsaurer Wasserstoffperoxidlösung anschließen, wonach anschließend das Titanzeolith-Pulver erneut getrocknet und gebrannt werden muß, wie es etwa in der EP-A-0 276 362 beschrieben wird. Der so erhaltene pulverförmige Titanzeolith kann nun abschließend unter Zusatz von geeigneten Bindemitteln in einem Formgebungsschritt verarbeitet werden. Eine Methode hierzu wird beispielsweise in der EP-A 0 200 260 beschrieben.

Die oben beschriebene Kristallisation des Titanzeoliths aus geeigneten Ausgangsstoffen durch hydrothermale Umsetzung wird im allgemeinen bei Temperaturen von 50 bis 250 °C über einen ausreichend langen Zeitraum durchgeführt, wobei sich temperaturbedingt ein autogener Druck einstellt.

Bezüglich der Herstellung des oben erwähnten Formkörpers sind sämtliche geeigneten Verfahren denkbar. Unter anderem bevorzugt kann der Titanzeolith beispielsweise mit einem Binder, einer organischen viskositätssteigemden Substanz und einer Flüssigkeit zum Anteigen der Masse versetzt und in einem Kneter oder Koller verdichtet werden. Anschließend kann die erhaltene Masse auch mittels Strangpresse oder Extruder verformt werden. Die erhaltenen Formkörper werden anschließend getrocknet und gegebenenfalls calciniert.

Unter anderem kann es notwendig sein, chemisch inerte Binder zu verwenden, die einen Einsatz des herzustellenden Oxides als beispielsweise Katalysator bei der Umsetzung reaktiver Edukte ermöglichen.

Geeignete Binder stellen eine Reihe von Metalloxiden dar. Beispielsweise seien Oxide des Siliciums, des Aluminiums, des Titans oder des Zirkons genannt. Siliciumdioxid als Binder ist beispielsweise in den Druckschriften US 5,500,199 und US 4,859,785 offenbart.

Bei derartigen Bindern kann es beispielsweise notwendig sein, daß der Gehalt an (Erd)alkalimetallionen möglichst niedrig ist, weshalb eine Verwendung von (erd)alkalimetallarmen bzw. (erd)alkalimetallfreien Binderquellen notwendig wird.

Zur Herstellung der oben genannten Metalloxid-Binder kann man als Edukte entsprechende Metalloxidsole verwenden. Bei der Herstellung von beispielsweise der erwähnten (erd)alkalimetallarmen bzw. (erd)allcalimetallfreien Siliciumdioxid-Binder dient demgemäß (erd)alkalimetallarmes bzw. (erd)alkalimetallfreies Kieselsol als Binderquelle.

Solche Formkörper können unter anderem dadurch erhalten werden, daß man in einer Stufe des Verfahrens den Titanzeolith mit Metalloxidsol und/oder Metalloxid vermischt, wobei das Metalloxidsol und das Metalloxid jeweils einen niedrigen Gehalt an (Erd)alkalimetallionen aufweisen.

In einer Ausführungsform des erfindungsgemäßen Verfahrens wird das Metalloxidsol durch Hydrolyse mindestens eines Metallsäureesters hergestellt.

Die zur Hydrolyse anstehenden Metallsäureester können vor der Hydrolyse gereinigt werden. Dabei sind alle geeigneten Verfahren denkbar. Bevorzugt werden die Metallsäureester vor der Hydrolyse einer Destillation unterzogen.

Hinsichtlich der Hydrolyse des Metallsäureesters kommen prinzipiell alle möglichen Verfahren in Betracht. Bevorzugt wird im erfindungsgemäßen Verfahren die Hydrolyse jedoch im wäßrigen Medium durchgeführt.

Katalysiert werden kann die Hydrolyse durch Zugabe basischer oder saurer Substanzen. Bevorzugt werden dabei basische oder saure Substanzen, die sich durch Calcinieren rückstandsfrei entfernen lassen. Vor allem werden Substanzen, ausgewählt aus der Gruppe Ammoniak, Alkylamine, Alkanolamine, Arylamine, Carbonsäuren, Salpetersäure und Salzsäure, verwendet. Insbesondere werden Ammoniak, Alkylamine, Alkanolamine und Carbonsäuren verwendet.

Bevorzugt wird im erfindungsgemäßen Verfahren als Metallsäureester unter anderem Orthokieselsäureester verwendet.

Die Hydrolyse der Metallsäureester erfolgt im erfindungsgemäßen Verfahren bei Temperaturen von 20 bis 100 °C, bevorzugt von 60 bis 95 °C sowie bei pH-Werten von 4 bis 10, bevorzugt von 5 bis 9, besonders bevorzugt von 7 bis 9.

Im erfindungsgemäßen Verfahren werden aus der Hydrolyse Metalloxidsole, unter anderem Kieselsole erhalten, die unter anderem einen Gehalt an (Erd)alkalimetallionen von weniger als 800 ppm, bevorzugt weniger als 600 ppm, weiter bevorzugt weniger als 400 ppm, weiter bevorzugt weniger als 200 ppm, weiter bevorzugt weniger als 100 ppm, besonders bevorzugt weniger als 50 ppm, weiter besonders bevorzugt weniger als 10 ppm und insbesondere weniger als 5 ppm aufweisen.

Der Gehalt der erfindungsgemäß hergestellten Metalloxidsole an Metalloxid beträgt im allgemeinen bis zu 50 Gew.-%, bevorzugt 10 bis 40 Gew.-%.

Der bei der Hydrolyse entstehende Alkohol wird im erfindungsgemäßen Verfahren in der Regel abdestilliert. Geringe Mengen an Alkohol können jedoch im Metalloxidsol verbleiben, solange sie in den weiteren Schritten des erfindungsgemäßen Verfahrens keine störenden Auswirkungen zeigen.

Vorteilhaft für den großtechnischen Einsatz der erfindungsgemäß hergestellten Metalloxidsole ist deren Eigenschaft, keine Tendenzen zur Gelbildung zu zeigen. Spezielle Vorsichtmaßnahmen zur Verhinderung der Gelbildung sind damit überflüssig. Die Lagerfähigkeit der erfindungsgemäß hergestellten Metalloxidsole beträgt mehrere Wochen, wodurch die zeitliche Koordination mit weiteren Verfahrensschritten unproblematisch wird.

Erfindungsgemäß wird im Verfahren beispielsweise ein Gemisch, umfassend mindestens den TItanzeolith und mindestens ein Metalloxid, hergestellt, wobei als Metalloxidquelle ein Metalloxidsol verwendet wird, das wie oben beschrieben hergestellt wird.

Prinzipiell bestehen keine Einschränkungen bezüglich des Verfahrens zur Herstellung des Gemisches. Bevorzugt wird im erfindungsgemäßen Verfahren jedoch eine Suspension, enthaltend mindestens den Titanzeolith und Metalloxidsol, versprüht.

Dabei bestehen hinsichtlich des Gehaltes der Suspension an Titanzeolith keine Einschränkungen, solange die Verarbeitbarkeit der Suspension beim Herstellen und Versprühen gewährleistet ist.

Die Hauptbestandteile der Suspension sind im allgemeinen Titanzeolith. Metalloxidsol und Wasser. Ferner kann die Suspension noch Restspuren organischer Verbindungen enthalten. Diese können beispielsweise aus der Herstellung des Zeolithen stammen. Ebenso sind Alkohole denkbar, die aus der Hydrolyse von Metallsäureester entstehen oder Substanzen, die wie oben beschrieben zur Förderung der Hydrolyse von Metallsäureester zugesetzt werden.

In Abhängigkeit davon, welche Feuchtigkeit das Gemisch zur weiteren Verarbeitung aufweisen soll, kann sich eine Trocknung anschließen. Dabei können alle denkbaren Verfahren angewendet werden. Bevorzugt erfolgt die Trocknung des Gemisches gleichzeitig mit dem Versprühen in einem Sprühtrocknungsvorgang. Bevorzugt werden die Sprühtrockner mit Inertgasen, besonders bevorzugt mit Stickstoff oder Argon betrieben.

In einer ebenfalls bevorzugten Ausführungsform des erfindungsgemäßen Verfahrens wird der Titanzeolith mit mindestens einem Metalloxid vermischt, das einen niedrigen Gehalt an Alkali- und Erdalkalimetallionen aufweist.

In dem Fall, daß der Titanzeolith mit zwei oder mehr Metalloxiden vermischt wird, ist es denkbar, den Titanzeolith zuerst mit einem Metalloxid zu vermischen und das erhaltene Gemisch mit einem weiteren Metalloxid zu vermischen. Falls gewünscht, kann dieses erhaltene Gemisch wiederum mit einem weiteren Metalloxid vermischt werden. Ebenso ist es möglich, den Titanzeolith mit einem Gemisch aus zwei oder mehr Metalloxiden zu vermischen.

Bei Herstellung eines (erd)allcalimetallarmen oxidischen Materials ist der (Erd)alkalimetallgehalt dieses Metalloxides oder des Gemisches aus zwei oder mehr Metalloxiden im allgemeinen kleiner als 800 ppm, bevorzugt kleiner 600 ppm, besonders bevorzugt kleiner 500 ppm und insbesondere bevorzugt kleiner 200 ppm.

Solche Metalloxide mit einem niedrigen Gehalt an Alkali- und Erdalkalimetallionen sind beispielsweise pyrogene Metalloxide, wobei als Beispiel für ein solches pyrogenes Metalloxid unter anderem pyrogene Kieselsäure genannt sei.

Im Rahmen des erfindungsgemäßen Verfahrens ist es natürlich auch möglich, das Gemisch, das aus dem Vermischen des Titanzeolithen mit dem Metalloxid resultiert, mit mindestens einem Metalloxidsol, das gegebenfalls einen niedrigen Gehalt an Alkali- und Erdalkalimetallionen aufweist, zu vermischen. Bezüglich der Herstellung dieses Gemisches bestehen, wie bei der Herstellung des Gemisches aus Titanzeolith und Metalloxidsol, wie oben beschrieben, prinzipiell keine Einschränkungen. Bevorzugt wird jedoch eine Suspension, umfassend das Gemisch aus dem mindestens einen Titanzeolithen und dem mindestens einen Metalloxid und das mindestens eine Metalloxidsol, versprüht. Hinsichtlich des Gehaltes dieser Suspension an Titanzeolith bestehen keine Einschränkungen, solange, wie bereits oben beschrieben, die Verarbeitbarkeit der Suspension gewährleistet ist.

Weiterhin ist es im Rahmen des erfindungsgemäßen Verfahrens natürlich auch möglich, ein Gemisch, das aus der Vermischung von mindestens einem Titanzeolithen mit mindestens einem Metalloxidsol resultiert, mit mindestens einem Metalloxid, das gegebenenfalls einen niedrigen Gehalt an Alkali- und Erdalkalimetallionen aufweist, zu vermischen. Dabei kann sich die Vermischung mit dem mindestens einen Metalloxid direkt an die Herstellung des Gemisches aus dem mindestens einen Titanzeolithen und dem mindestens einen Metalloxidsol anschließen. Sollte, wie bereits oben beschrieben, nach der Herstellung des Gemisches aus dem mindestens einen Titanzeolithen und dem mindestens einen Metalloxidsol eine Trocknung erforderlich sein, ist es auch möglich, das Metalloxid nach der Trocknung mit dem getrockneten Gemisch zu vermischen.

Ebenso ist es im Rahmen des erfindungsgemäßen Verfahrens möglich, den mindestens einen Titanzeolithen gleichzeitig mit mindestens einem Metalloxidsol und mindestens einem Metalloxid zu vermischen.

Das Gemisch, das nach einer der obenstehend beschriebenen Ausführungsformen der Erfindung erhalten wird, wird in einer weiteren Stufe des erfindungsgemäßen Verfahrens verdichtet. In diesem Verdichtungs- oder Verfonnungsschritt kann dabei optional weiteres Metalloxid eingebracht werden, wobei als Metalloxidquelle Metalloxidsol dient, das wie oben beschrieben hergestellt wurde. Dieser Verarbeitungsschritt kann in allen dafür bekannten Apparaturen erfolgen, wobei jedoch Kneter, Koller oder Extruder bevorzugt sind. Besonders bevorzugt für den großtechnischen Einsatz des erfindungsgemäßen Verfahrens wird ein Koller verwendet.

Wird gemäß einer bereits oben beschriebenen Ausführungsform zuerst ein Gemisch aus dem Titanzeolithen und mindestens einem Metalloxid hergestellt, dieses Gemisch verdichtet und im Verdichtungsschritt zusätzlich Metalloxidsol, das einen niedrigen Gehalt an Alkali- und Erdalkalimetallionen aufweist. zugegeben, so werden in einer bevorzugten Ausiuhrungsfbrm der vorliegenden Erfindung 20 bis 80 Gew.-% Titanzeolith, 10 bis 60 Gew.-% Metalloxid und 5 bis 30 Gew.-% Metalloxidsol verwendet. Besonders bevorzugt werden 40 bis 70 Gew.-% Titanzeolith, 15 bis 30 Gew.-% Metalloxid und 10 bis 25 Gew.-% Metalloxidsol verwendet. Diese Gewichtsprozentangaben sind jeweils bezogen auf das letztlich hergestellte oxidische Material in Form des Formkörper, wie untenstehend beschrieben.

In einer weiteren Ausführungsfbrm des erfindungsgemäßen Verfahrens erfolgt das Vermischen des mindestens einen Titanzeolithen mit dem mindestens einen Metalloxid, das gegebenenfalls einen niedrigen Gehalt an Alkali- und Erdalkalimetallionen aufweist, während des Verdichtungsschritts. Ebenso ist es demgemäß möglich, im Verdichtungsschritt den mindestens einen Titanzeolithen, das mindestens eine Metalloxid und zusätzlich mindestens ein Metalloxidsol zu vermischen.

In diesem Verformungsschritt können zusätzlich eine oder mehrere vikositätssteigemde Substanzen als Anteigungsmittel zugegeben werden, die unter anderem dazu dienen, die Stabilität des uncalcinierten Formkörpers, wie untenstehend beschrieben, zu erhöhen. Dafür können alle geeigneten, aus dem Stand der Technik bekannten Substanzen verwendet werden. Im erfindungsgemäßen Verfahren werden Wasser sowie Mischungen von Wasser mit einer oder mehreren organischen Substanzen, sofern diese mit Wasser mischbar sind, als Anteigungsmittel verwendet. Das Anteigungsmittel kann beim späteren Calcinieren des Formkörpers wieder entfernt werden.

Vorzugsweise werden organische, insbesondere hydrophile organische Polymere wie z.B. Cellulose, Cellulosederivate wie beispielsweise Methylcellulose, Ethylcellulose oder Hexylcellulose, Polyvinylpyrolidon, Ammonium(meth)acrylate, Tylose oder Gemische aus zwei oder mehr davon verwendet. Besonders bevorzugt wird Methylcellulose verwendet.

Als weitere Zusatzstoffe können Ammoniak. Amine oder aminartige Verbindungen wie z.B. Tetraalkylammoniumverbindungen oder Aminoalkoholate zugesetzt werden. Derartige weitere Zusatzstoffe sind in der EP-A 0 389 041, der EP-A 0 200 260 und der WO 95/19222 beschrieben, die diesbezüglich vollumfänglich in den Kontext der vorliegenden Anmeldung durch Bezugnahme einbezogen werden.

Statt basischer Zusatzstoffe ist es auch möglich, saure Zusatzstoffe zu verwenden. Bevorzugt sind organische saure Verbindungen, die sich nach dem Verformungsschritt durch Calcinieren herausbrennen lassen. Besonders bevorzugt sind Carbonsäuren.

Die Menge an diesen Hilfsstoffen beträgt vorzugsweise 1 bis 10 Gew.-%, besonders bevorzugt 2 bis 7 Gew.-%, jeweils bezogen auf den letztlich hergestellten Formkörper, wie untenstehend beschrieben.

Zur Beeinflussung von Eigenschaften des Formkörpers wie z.B. Transportporenvolumen, Transportporendurehmesser und Transportporenverteilung kann man weitere Substanzen, vorzugsweise organische Verbindungen, insbesondere organische Polymere als weitere Zusatzstoffe zugeben, die auch die Verformbarkeit der Masse beeinflussen können. Solche Zusatzstoffe sind unter anderem Alginate, Polyvinylpyrolidone, Stärke, Cellulose, Polyether, Polyester, Polyamide, Polyamine, Polyimine, Polyalkene, Polystyrol, Styrol-Copolymere, Polyacrylate, Polymethylacrylate, Fettsäuren wie beispielsweise Stearinsäure, hochmolekulare Polyalkylenglykole wie beispielsweise Polyethylenglykol, Polypropylenglykol oder Polybutylenglykol, oder Gemische aus zwei oder mehr davon. Die Gesamtmenge an diesen Stoffen, bezogen auf den letztlich hergestellten Formkörper, wie untenstehend beschrieben, beträgt vorzugsweise 0,5 bis 10 Gew.-%, besonders bevorzugt 1 bis 6 Gew.-%.

Die Zugabereihenfolge der oben beschriebenen Zusatzstoffe zu dem Gemisch, das gemäß einem der oben beschriebenen Verfahren erhalten wurde, ist unkritisch. Es ist sowohl möglich, zuerst weiteres Metalloxid via Metalloxidsol, anschließend die viskositätssteigernden und dann die die Transporteigenschaften und/oder die Verformbarkeit der verdichteten Masse beeinflussenden Substanzen einzubringen, als auch jede beliebige andere Reihenfolge.

Wahlweise kann vor der Verdichtung das in der Regel noch pulverförmige Gemisch 10 bis 180 min im Kneter oder Extruder homogenisiert werden. Dabei wird in der Regel bei Temperaturen im Bereich von ungefähr 10 °C bis zum Siedepunkt des Anteigungsmittels und Normaldruck oder leichtem überatmosphärischem Druck gearbeitet. Das Gemisch wird solange geknetet, bis eine verstrangbare oder extrudierfähige Masse entstanden ist.

Die nach dem Verdichten zur Verformung anstehende Masse besitzt im erfindungsgemäßen Verfahren einen Anteil an Metalloxid von mindestens 10 Gew.-%, bevorzugt mindestens 15 Gew.-%, besonders bevorzugt mindestens 20 Gew.-%, insbesondere mindestens 30 Gew.-%, bezogen auf die Gesamtmasse.

Prinzipiell können für die Knetung und die Verformung alle herkömmlichen Knet- und Verformungsvorrichtungen bzw. Verfahren, wie sie zahlreich aus dem Stand der Technik bekannt und für die Herstellung von z.B. Katalysator-Formkörpern geeignet sind, verwendet werden.

Vorzugsweise werden Verfahren verwendet, bei denen die Verformung durch Extrusion in üblichen Extrudern, beispielsweise zu Strängen mit einem Durchmesser von üblicherweise ungefähr 1 bis ungefähr 10 mm, insbesondere ungefähr 1,5 bis ungefähr 5 mm erfolgt. Derartige Extrusionsvorrichtungen werden beispielsweise in Ullmanns "Enzyklopädie der Technischen Chemie", 4. Auflage, Bd. 2 (1972), S. 295 ff. beschrieben. Neben der Verwendung eines Extruders wird ebenfalls vorzugsweise eine Strangpresse verwendet. Im Falle einer großtechnischen Anwendung des Verfahrens wird besonders bevorzugt mit Extrudern gearbeitet.

Die Extrudate sind entweder Stränge oder Wabenkörper. Die Form der Waben ist beliebig. Es kann sich dabei beispielsweise um Rundstränge, Hohlstränge oder sternförmige Stränge handeln. Auch der Durchmesser der Waben ist beliebig. Über die äußere Form sowie den Durchmesser entscheiden in der Regel die prozeßtechnischen Anforderungen, die durch das Verfahren, in dem der Formkörper eingesetzt werden soll, vorgegeben werden.

Nach Beendigung des Strangpressens oder des Extrudierens werden die erhaltenen Formkörper bei im allgemeinen 50 bis 250 °C, bevorzugt 80 bis 250 °C bei Drücken von im allgemeinen 0,01 bis 5 bar, bevorzugt 0,05 bis 1,5 bar im Laufe von ungefähr 1 bis 20 h getrocknet.

In einer bevorzugten Ausführungsform wird das oxidische Material, gleich ob als Formkörper oder als Pulver, vor der weiteren Umsetzung gemäß (b) calciniert. Diese anschließende Calcinierung erfolgt bei Temperaturen im Bereich von 250 bis 800 °C, bevorzugt von 350 bis 600 °C und besonders bevorzugt von 400 bis 500 °C. Der Druckbereich wird ähnlich dem der Trocknung gewählt. In der Regel wird in sauerstoffhaltiger Atmosphäre calciniert, wobei der Sauerstoffgehalt 0,1 bis 90 Vol.-%, bevorzugt 0,2 bis 22 Vol.-%, besonders bevorzugt 0,2 bis 10 Vol.-% beträgt.

Eine spezielle Ausführungsform der Erfindung besteht darin, der wie oben beschriebenen Suspension das Metalloxidsol zuzusetzen, die resultierende Suspension zu trocknen, vorzugsweise durch Sprühtrocknung, und das resultierende Pulver zu calcinieren. Das getrocknete und calcinierte Produkt kann dann wie oben beschrieben weiter verarbeitet werden.

Ganz allgemein kann das gemäß (a) erhaltene oxidische Material ein Pulver oder ein Formkörper sein. Dabei ist es unerheblich, ob das Pulver direkt aus der Herstellung des oxidischen Materials anfällt oder das Pulver durch spezifische Zerkleinerung eines Formkörpers hergestellt wird.

Selbstverständlich können die oben beschriebenen Stränge oder Extrudate konfektioniert werden. Sämtliche Verfahren zur Zerkleinerung sind dabei denkbar, beispielsweise durch Splittung oder Brechen der Formkörper, ebenso wie weitere chemische Behandlungen. wie beispielsweise oben beschrieben. Findet eine Zerkleinerung statt, wird dabei vorzugsweise Granulat oder Splitt mit einem Partikeldurchmesser von 0, 1 bis 5 mm, insbesondere 0,5 bis 2 mm erzeugt.

Dieses Granulat oder dieser Splitt und auch auf anderem Wege erzeugte Formkörper enthalten praktisch keine feinkörnigeren Anteile als solche mit ungefähr 0,1 mm Mindestpartikeldurchmesser.

Im Falle, daß das gemäß (a) erhaltene oxidische Material mit dem mindestens einen Silan oder Silanderivat in mindestens einem Lösungsmittel umgesetzt wird, sind sämtliche für diese Umsetzung geeigneten Lösungsmittel denkbar. Insbesondere kann das mindestens eine Lösungsmittel oder das Lösungsmittelgemisch auf das oxidische Material und das Silan oder Silanderivat abgestimmt werden.

Dabei sind sämtliche Vorgehensweisen, wie Silan oder Silanderivat, oxidisches Material und Lösungsmittel in Kontakt gebracht werden, denkbar. So kann das oxidische Material beispielsweise in ein Lösungsmittel oder ein Lösungsmittelgemisch eingebracht werden und anschließend in die resultierende Lösung oder Suspension mindestens ein Silan oder mindestens ein Silanderivat oder ein Gemisch aus zwei oder mehr davon eingebracht werden. Selbstverständlich können hierbei das mindestens eine Silan oder das mindestens eine Silanderivat oder das Gemisch aus zwei oder mehr davon bereits in einem Lösungsmittel oder einem Lösungsmittelgemisch gelöst öder suspendiert sein.

In einer bevorzugten Ausführungsform des erfindungsgemäßen Verfahrens wird das gemäß (a) calcinierte oxidische Material in eine Lösung gegeben, in der das mindestens eine Silan oder das mindestens eine Silanderivat oder das Gemisch aus zwei oder mehr davon, gelöst in einem wasserfreien Lösungsmittel oder Lösungsmittelgemisch, vorliegen.

Die Konzentrationen von oxidischem Material und/oder dem mindestens einen Silan oder dem mindestens einen Silanderivat oder dem Gemisch aus zwei oder mehr davon in den Ausgangslösungen, die, wie oben beschrieben werden, zusammengegeben werden oder in der Lösung, in der die Umsetzung vonstatten geht, ist unkritisch und kann den Erfordernissen der Reaktionsführung angepaßt werden. In der bevorzugten Ausführungsform des erfindungsgemäßen Verfahrens, in der das oxidische Material zu einer Lösung des mindestens einen Silans oder des mindestens einen Silanderivats oder des Gemisches aus zwei oder mehr davon gegeben wird, liegt die Konzentration des mindestens einen Silans oder des mindestens einen Silanderivats oder des Gemisches aus zwei oder mehr davon in der Lösung im allgemeinen in einem Bereich, in dem gewährleistet ist, daß die Umsetzung von Silan oder Silanderivat mit dem oxidischen Material im gewünschten Ausmaß gewähleistet ist. Bevorzug liegt die Konzentration tim Bereich von bis zu 5 Gew.-%, besonders bevorzugt bei ungefähr 2 Gew.-%, jeweils bezogen auf das Gesamtgewicht der Lösung aus Silan(derivat) und Lösungsmittel.

Die Umsetzung des oxidischen Materials mit dem mindestens einen Silan oder dem mindestens einen Silanderivat oder dem Gemisch aus zwei oder mehr davon findet bei Temperaturen statt, die bevorzugt unterhalb der Siedetemperatur der beteiligten Lösungsmittel liegen.. Unter anderem ist es in diesem Zusammenhang beispielsweise auch denkbar, die Temperatur während der Umsetzung zu erhöhen, um so beispielsweise die Reaktion zu beschleunigen

Der Druck, unter dem die Reaktion durchgeführt wird, ist weitgehend unkritisch und kann an die speziellen Erfrodemisse der Reaktionsführung angepaßt werden.

Die Umsetzungsdauer des oxidischen Materials mit dem Silan(derivat) kann im erfindungsgemäßen Verfahren im wesentlichen frei gewählt werden und je nach gewünschtem Umsetzungsgrad und/oder Reaktivität der Reaktionspartner und/oder der Reaktionstemperatur und/oder dem Reaktionsdruck eingestellt werden. Insbesondere liegt die Umsetzungsdauer im Bereich von einigen Minuten bis zu mehreren Stunden.

Selbstverständlich ist es im Rahmen des erfindungsgemäßen Verfahrens auch denkbar, das oxidische Material in mehreren Stufen mit einem oder mehreren Silan(derivaten) umzusetzen. Insbesondere kann das oxidische Material in einem Lösungsmittel oder Lösungsmittelgemisch mit dem Silan(derivat) umgesetzt werden und der resultierenden Lösung, die das Umsetzungsprodukt umfaßt, weiteres Silan(derivat), gegebenfalls gelöst in einem anderen Lösungsmittel oder Lösungsmittelgemisch, zugegeben werden. Selbstverständlich kann das weitere Silan(derivat) gleich oder verschieden von dem ursprünglich eingesetzten Silan(derivat) sein.

In einer weiteren Ausführungsform des erfindungsgemäßen Verfahrens können selbstverständlich auch zwei oder mehr unterschiedliche oxidische Materialien in gegebenenfalls zwei oder mehr Stufen mit gegebenenfalls zwei oder mehr unterschiedlichen Silan(derivaten) in gegebenfalls zwei oder mehr unterschiedlichen Lösungsmitteln oder Lösungsmittelgemischen umgesetzt werden.

Direkt im Anschluß an die Umsetzung des oxidischen Materials mit dem mindestens einen Silan oder dem mindestens einen Silanderivats oder dem Gemisch aus zwei oder mehr davon wird das mindestens eine Lösungsmittel unter Erhalt des oxidischen Umsetzungsproduktes entfernt. Hierfür sind wiederum sämtliche denkbaren Verfahren möglich. Unter anderem ist es denkbar, den Druck zu erniedrigen und so das mindestens eine Lösungsmittel abzuziehen. Ebenso ist es denkbar, die Temperatur über den Siedepunkt des Lösungsmittels oder die Siedepunkte der Lösungsmittel hinaus zu erhöhen. Selbstverständlich können diese Methoden auch kombiniert werden.

Demgemäß betrifft die vorliegende Erfindung auch ein Verfahren, wie oben beschrieben, dadurch gekennzeichnet, daß aus der in (i) hergestellten Mischung das mindestens eine Lösungsmittel entweder durch Temperaturerhöhung oder durch Druckemiedrigung oder durch sowohl Temperaturerhöhung als auch Druckerniedrigung entfernt wird.

Nach der wie oben beschriebenen Trocknung durch Lösungsmittelentzug wird in einem direkt folgenden Schritt das erhaltene oxidische Umsetzungsprodukt calciniert. Die Temperatur, die bei der Calcinierung des oxidischen Umsetzungsproduktes gewählt wird, ist unkritisch, solange gewährleistet ist, daß organische Reste, die durch die Umsetzung des oxidischen Materials mit dem mindestens einen Silan oder dem mindestens einen Silanderivat oder dem Gemisch aus zwei oder mehr davon im Umsetzungsprodukt vorliegen, durch die Calcinierung restlos entfernt werden, so daß im nach der Calcinierung resultierenden Oxid keine Silicium-Kohlenstoff Bindungen mehr vorliegen. Bevorzugt liegen die Temperaturen bei der Calcinierung im Bereich von 200 bis 750 °C, besonders bevorzugt im Bereich von 400 bis 500 °C. Wie bereits bei der hinsichtlich der Trocknung beschriebenen Vorgehensweise kann auch die Calcinierung unter zusätzlicher Druckverminderung durchgeführt werden.

Die Dauer der Calcinierung ist wiederum unkritisch, solange gewährleistet ist, daß im nach der Calcinierung resultierenden Oxid keine Silicium-Kohlenstoff Bindungen mehr vorliegen. Im allgemeinen liegen die Calcinierungsdauern im Bereich von 0,5 bis 24 h, bevorzugt im Bereich von 0,75 bis 12 h und besonders bevorzugt im Bereich von 1 bis 5 h.

In einer bevorzugten Ausfübrungsform des erfindungsgemäßen Verfahrens werden Trocknung und Calcinierung zusammen in einem einzigen Schritt durchgeführt. Insbesondere wird die Mischung, die Lösungsmittel und oxidisches Umsetzungsprodukt umfaßt, daher nach der Umsetzung einem Temperatur- und Druckbereich ausgesetzt, in dem das mindestens. eine Lösungsmittel entfernt und das oxidische Umsetzungsprodukt unter Erhalt des Oxides calciniert werden.

Demgemäß betrifft die vorliegende Erfindung auch ein Verfahren, wie oben beschrieben, dadurch gekennzeichnet, daß das mindestens eine Lösungsmittel bei einer Temperatur entfernt wird, bei der sowohl das mindestens eine Lösungsmittel entfernt als auch das mindestens eine oxidische Umsetzungsprodukt calciniert wird.

Selbstverständlich ist auch eine Verfahrensführung denkbar, in der die Temperatur, der die Mischung, umfassend Lösungsmittel und oxidisches Umsetzungsprodukt, ausgesetzt wird, kontinuierlich oder in Stufen gesteigert wird und so allmählich von der Trocknung zur Calcinierung übergegangen wird. Insbesondere kann hierbei auch der Druck variiert werden und somit der von der Temperatur bewirkte Trocknungs- und Calcinierungseffekt beeinflußt, bevorzugt verstärkt werden.

Die Ausfiihrungsform des erfindungsgemäßen Verfahrens, in dem das oxidische Material in Lösung mit dem Silan(derivat) umgesetzt wird, wird bevorzugt dann angewendet, wenn das Silan(derivat) bei der gewünschten Umsetzungstemperatur und dem gewünschten Umsetzungsdruck als Flüssigkeit vorliegt. Ebenso ist aber auch denkbar, daß gasförmiges Silan(derivat) in das mindestens eine Lösungsmittel eingeleitet, im Lösungsmittel gelöst und mit dem oxidischen Material umgesetzt wird.

In einer weiteren bevorzugten Ausführungsform des erfindungsgemäßen Verfahrens wird das gemäß (a) erhaltene oxidische Material mit mindestens einem Silan oder mindestens einem Silanderivat oder einem Gemisch aus zwei oder mehr davon in der Gasphase umgesetzt. Dieses Verfahren wird bevorzugt dann angewendet, wenn das Silan(derivat) bei der gewünschten Umsetzungstemperatur und dem gewünschten Umsetzungsdruck gasförmig ist.

In einer weiter bevorzugten Ausführungsform wird das gasförmige Silan(derivat) in einem oder mehreren Inertgasen verdünnt, bevor es mit dem oxidischen Material in Kontakt gebracht wird. Werden zwei oder mehr Silan(derivate) zur Umsetzung verwendet, so kann jedes dieser Silane oder Silanderivate separat in mindestens einem geeigneten Inertgas verdünnt werden. Die einzelnen Gasmischungen können dann zusammengeführt und als einziger Strom mit dem oxidischen Material in Kontakt gebracht werden. Ebenso ist es denkbar, die einzelnen Gasmischungen getrennt mit dem oxidischen Material in Kontakt zu bringen, wobei das Inkontaktbringen der einzelnen Mischungen mit dem oxidischen Material gleichzeitig oder auch hintereinander erfolgen kann.

Bei dieser bevorzugten Ausführungsform wird im allgemeinen bei Temperaturen gearbeitet, bei denen das Silan oder Silanderivat einen für die Umsetzung ausreichenden Dampfdruck aufweist. Der Druck, der dabei gewählt wird, kann hierbei den gewünschten Reaktionsbedingungen angepaßt werden.

Im allgemeinen wird bei dieser Ausführungsform die Umsetzung während einer Zeit von 0,5 bis 10 Stunden durchgerührt, wobei jedoch auch längere oder kürzere Zeiten gewählt werden können, falls dies durch die Reaktionsparameter wie Druck und Temperatur oder durch eine spezielle Wahl der Reaktionspartner erforderlich sein sollte.

Selbstverständlich ist es im Rahmen der vorliegenden Erfindung auch denkbar, das oxidische Material zunächst in der Gasphase mit einem Silan(derivat) in Kontakt zu bringen und anschließend mit einem Silan(derivat) in Lösung in Kontakt zu bringen. Dies kann beispielsweise dadurch realisiert werden, daß das oxidische Material zunächst in der Gasphase, wie oben beschrieben, mit einem Silan(derivat) in Kontakt gebracht wird und anschließend mit einer Lösung, umfassend Lösungsmittel und Silan(derivat), in Kontakt gebracht wird. Weiter ist beispielsweise denkbar, das oxidische Material in Lösung mit einem Silan(derivat) umzusetzen und die erhaltene Lösung gasförmiges weiteres Silan(derivat) einzuleiten.

Direkt im Anschluß an die Gasphasenbehandlung des oxidischen Materials mit dem Silan(derivat) schließt sich die Calcinierung des erhaltenen oxidischen Umsetzungsproduktes an. Hierbei kann verwiesen werden auf die Ausführungsformen der Calcinierung, wie sie obenstehend im Zusammenhang mit der Umsetzung in Lösung beschrieben wurden.

Während die Atmosphäre, in der die Calcinierung durchgeführt wird, im wesentlichen keinen Einschränkungen unterliegt, so ist eine Atmosphäre, die Sauerstoff umfaßt, sowie eine Calcinierung unter Luftausschluß bevorzugt. Besonders bevorzugt ist eine SauerstoffAtmosphäre.

Daher betrifft die vorliegende Erfindung auch ein Verfahren, wie oben beschrieben, dadurch gekennzeichnet, daß die Calcinierung bei Temperaturen von mehr als 200 °C in Anwesenheit von Sauerstoff stattfindet.

Sämtliche Silane und/oder Silanderivate mit mindesten einer Silicium-Kohlenstoff-Bindung, die mit einer kristallinen Silikatphase, die mindestens eine Zeolithstruktur aufweist, dergestalt umgesetzt werden können, daß durch diese Umsetzung auf diese kristalline Silikatphase eine nicht-kristalline Silikatphase aufgebracht wird, sind für das Verfahren der vorliegenden Erfindung geeignet.

In einer bevorzugten Ausführungsform beschreibt die vorliegende Erfindung ein Verfahren, wie oben beschrieben, dadurch gekennzeichnet ist, daß das mindestens eine Silan oder das mindestens eine Silanderivat ausgewählt wird aus der Gruppe bestehend aus Methylhydrogendichlorsilan, Mono-, Di- und Trimethylchlorsilan, Alkylalkoxysilanen mit gleichen oder voneinander verschiedenen Alkylresten und Alkoxyresten, und den vorgenannten Silanen oder Silanderivaten, die zusätzlich eine oder mehrere funktionelle Gruppen, ausgewählt aus der Gruppe bestehend aus Hydroxy-, Carboxyl-, Vinyl-, Glycidyl-, Amino- und Aminoalkylgruppen, aufweisen.

In einer ganz besonders bevorzugten Ausführungsform beschreibt die vorliegende Erfindung ein Verfahren, in dem ein oxidisches Material in Form eines Formkörpers, hergestellt aus Titansilikalit der TS-1-Struktur und Siliciumdioxidbinder, mit 3-Aminopropyltriethoxysilan, gelöst in einem geeigneten wasserfreien Lösungsmittel, umgesetzt wird.

Das Oxid, hergestellt im erfindungsgemäßen Verfahren, kann bevorzugt als Katalysator eingesetzt werden.

Insbesondere wird das Oxid zur Umsetzung von organischen Verbindungen eingesetzt. Unter anderem sind hierbei zu nennen:
- die Epoxidation von Olefinen wie z.B. die Herstellung von Propenoxid aus Propen und H₂O₂ oder aus Propen und Gemischen, die H₂O₂ in situ liefern;
- Hydroxylierungen wie z.B die Hydroxylierung mono-, bi- oder polycyclischer Aromaten zu mono-, di- oder höher substituierten Hydroxyaromaten, beispielsweise die Umsetzung von Phenol und H₂O₂ oder von Phenol und Gemischen, die H₂O₂ in situ liefern, zu Hydrochinon;
- die Umwandlung von Alkanen zu Alkoholen, Aldehyden und Säuren;
- die Oximbildung aus Ketonen unter Anwesenheit von H₂O₂ oder Gemischen, die H₂O₂ in situ liefern, und Ammoniak (Ammonoximienmg), beispielsweise die Herstellung von Cyclohexanonoxim aus Cyclohexanon;
- Isomerisierungsneaktionen wie z.B. die Umwandlung von Epoxiden zu Aldehyden;
- sowie weitere in der Literatur mit derartigen Formkörpern, insbesondere Zeolith-Katalysatoren beschriebene Umsetzungen, wie sie beispielsweise von W. Hölderich in "Zeolites: Catalysts for the Synthesis ofOrganic Compounds", Elsevier, Stud. Surf Sci. Catal., 49, Amsterdam (1989), S. 69 bis 93, und insbesondere für mögliche Oxidationsreaktionen von B. Notari in Stud. Surf Sci. Catal., 37 (1987), S. 413 bis 425, oder in Advances in Catalysis, Vol. 41, Academic Press (1996), S. 253 bis 334 beschrieben sind.

Das nach dem erfindungsgemäßen Verfahren hergestellte Oxid kann zur Epoxidierung von Alkenen eingesetzt werden

Alkene, die für eine solche Funktionalisierung durch Epxidation in Frage kommen, sind beispielsweise Ethen, Propen, 1-Buten, 2-Buten, Isobuten, Butadien, Pentene, Piperylen, Hexene, Hexadiene, Heptene. Octene, Düsobuten, Trimethylpenten, Nonene, Dodecen, Tridecen, Tetra- bis Eicosene, Tri- und Tetrapropen, Polybutadiene, Polyisobutene, Isoprene, Terpene, Geraniol, Linalool, Linalylacetat, Methylencyclopropan, Cyclopenten, Cyclohexen, Norbomen, Cyclohepten, Vinylcyclohexan, Vinyloxiran, Vinylcyclohexen, Styrol, Cycloocten, Cyclooctadien, Vinylnorbomen, Inden, Tetrahydroinden, Methylstyrol, Dicyclopentadien, Divinylbenzol, Cyclododecen, Cyclododecatrien, Stüben, Diphenylbutadien, Vitamin A, Betacarotin, Vinylidenfluorid, Allylhalogenide, Crotylchlorid, Methallylchlorid, Dichlorbuten, Allylalkohol, Methallylalkohol, Butenole, Butendiole, Cyclopentendiole, Pentenole, Octadienole, Tridecenole, ungesättigte Steroide, Ethoxyethen, Isoeugenol, Anethol, ungesättigte Carbonsäuren wie z.B. Acrylsäure, Methacrylsäure, Crotonsäure, Maleinsäure, Vinylessigsäure, ungesättigte Fettsäuren, wie z.B. Ölsäure, Linolsäure, Palmitinsäure, natürlich vorkommende Fette und Öle.

Vorzugsweise eignen sich die vorstehend ausführlich diskutieren Oxide für die Epoxidation von Alkenen mit 2 bis 8 C-Atomen, weiter bevorzugt von Ethen, Propen oder Buten, und insbesondere von Propen zu den entsprechenden Alkenoxiden.

Nach Einsatz als Katalysator können die Oxide nach sämtliche geeigneten Verfahren zum erneuten Einsatz als Katalysator regeneriert werden. Im einzelnen sind dabei unter anderem die folgenden Verfahren zu nennen:
1. ein Verfahren das das Erhitzen eines verbrauchten Katalysators bei einer Temperatur von weniger als 400 °C, aber höher als 150 °C in Gegenwart von molekularem Sauerstoff für einen Zeitraum, der ausreichend zur Erhöhung der Aktivität des verbrauchten Katalysators ist, umfaßt, wie es in der EP-A 0 743 094 beschrieben ist;
2. ein. Verfahren, das das Erwärmen eines verbrauchten Katalysators bei einer Temperatur von 150 °C bis 700 °C in Gegenwart eines Gasstroms, der höchstens 5 Vol.-% molekularen Sauerstoffs enthält, über einen Zeitraum, der ausreicht, um die Aktivität des verbrauchten Katalysators zu verbessern, umfaßt, wie es in der EP-A 0 790 075 beschrieben ist;
3. ein Verfahren, in dem ein verbrauchter Katalysator durch Erhitzen bei 400 bis 500 °C in Gegenwart eines Sauerstoff enthaltenden Gases oder durch Waschen mit einem Lösungsmittel, vorzugsweise bei einer Temperatur, die 5 °C bis 150 °C höher ist als die während der Umsetzung verwendete Temperatur, behandelt wird, wie es in der JP-A 3 11 45 36 beschrieben wird;
4. ein Verfahren, in dem ein verbrauchter Katalysators durch Calcinieren bei 550 °C an Luft oder durch Waschen mit Lösungsmitteln behandelt wird, wobei die Aktivität des Katalysators wiederhergestellt wird, wie es in "Proc. 7^{th} Intern. Zeolite Conf. 1986 (Tokyo)" beschrieben wird;
5. ein Verfahren zur Regenerierung eines Katalysators, das die folgenden Stufen (A) und (B) umfaßt:
   (A) Aufheizen eines zumindest teilweise deaktivierten Katalysators auf eine Temperatur im Bereich 250 °C bis 600 °C in einer Atmosphäre, die weniger als 2 Vol.-% Sauerstoff enthält, und
   (B) Beaufschlagen des Katalysators bei einer Temperatur im Bereich von 250 bis 800 °C, vorzugsweise 350 bis 600 °C, mit einem Gasstrom, der einen Gehalt an einer Sauerstoff liefernden Substanz oder an Sauerstoff oder an einem Gemisch aus zwei oder mehr davon im Bereich von 0,1 bis 4 Vol.-% aufweist,
      wobei das Verfahren auch die weiteren Stufen (C) und (D),
   (C) Beaufschlagen des Katalysators bei einer Temperatur im Bereich von 250 bis 800 °C, vorzugsweise 350 bis 600 °C, mit einem Gasstrom, der einen Gehalt an einer Sauerstoff-liefernden Substanz oder an Sauerstoff oder an einem Gemisch aus zwei oder mehr davon im Bereich von mehr als 4 bis 100 Vol.-% aufweist,
   (D) Abkühlen des in Stufe (C) erhaltenen regenerierten Katalysators in einem Inertgasstrom, der bis zu 20 Vol.-% eines Flüssigkeitsdampfes, ausgewählt aus der Gruppe bestehend aus Wasser, einem Alkohol, einem Aldehyd, einem Keton, einem Ether, einer Säure, einem Ester, einem Nitril, einem Kohlenwasserstoff sowie einem Gemisch aus zwei oder mehr davon,
umfassen kann. Details bezüglich dieses Verfahrens sind der DE-A 197 23 949.8 zu entnehmen.

Weiter ist es ebenso denkbar, den Katalysator zur Regenerierung mit mindestens einer Wasserstoffperoxidlösung oder auch mit einer oder mehreren oxidierenden Säuren zu waschen. Selbstverständlich können auch die vorstehend beschriebenen Methoden in geeigneter Weise miteinander kombiniert werden.

Werden die Oxide als Katalysatoren eingesetzt, so weisen sie im Vergleich zu Katalysatoren, die, bis auf die Behandlung mit Silanen, in der gleichen Art und Weise hergestellt wurden, ein höhere Selektivität auf. Weiter sind die Oxide nach einem Einsatz als Katalysator mechanisch stabiler als Katalysatoren, die zwar mit Silanen behandelt wurden, die jedoch nicht direkt im Anschluß an die Umsetzung mit Silanen bzw. direkt im Anschluß an die Trocknung calciniert wurde.

### Beispiele

### Beispiel 1: Herstellung von TS-1

In einem Vierhalskolben (41 Inhalt) wurden 910 g Tetraethylorthosilicat vorgelegt und aus einem Tropftrichter innerhalb von 30 min mit 15 g Tetraisopropylorthotitanat unter Rühren (250 U/min, Blattrührer) versetzt. Es bildete sich eine farblose, klare Mischung. Anschließend versetzte man mit 1600 g einer 20 gew.-%igen Tetrapropylammoniumhydroxid-Lösung (Alkaligehalt < 10 ppm) und rührte noch eine Stunde nach. Bei 90 bis 100 °C wurde das aus der Hydrolyse gebildete Alkoholgemisch (ca. 900 g) abdestilliert. Man füllte mit 3 1 Wasser auf und gab das mittlerweile leicht opaque Sol in einen 5 1 fassenden Rührautoklaven aus Edelstahl.

Mit einer Heizrate von 3 °C/min wurde der verschlossene Autoklav (Ankerrührer, 200 U/min) auf eine Reaktionstemperatur von 175 °C gebracht. Nach 92 Stunden war die Reaktion beendet. Das erkaltete Reaktionsgemisch (weiße Suspension) wurde abzentrifugiert und mehrfach mit Wasser neutral gewaschen. Der erhaltene Feststoff wurde bei 110 °C innerhalb von 24 Stunden getrocknet (Auswaage: 298 g).

Anschließend wurde unter Luft bei 550 °C in 5 Stunden das im Zeolithen verbliebene Templat abgebrannt. (Calcinierungsverlust: 14 Gew.-%).

Das reinweiße Produkt hatte nach naßchemischer Analyse einen Ti-Gehalt von 1,3 Gew.-% und einen Gehalt an Restalkali unterhalb 100 ppm. Die Ausbeute auf eingesetztes SiO₂ betrug 97 %. Die Kristallite hatten eine Größe von 0,05 bis 0,25 µm, und das Produkt zeigte im IR-Spektrum eine typische Bande bei ca. 960 cm⁻¹.

### Beispiel 2: Herstellung von 1 mm-Strängen aus TS-1

120 g Titansilicalit-Pulver, synthetisiert gemäß Beispiel 1, wurden mit 48 g Tetramethoxysilan 2 h lang im Kneter vermischt. Anschließend wurden 6 g Walocel (Methylcellulose) zugegeben. Zum Anteigen gab man nun 77 ml einer Wasser-Methanol-Mischung zu, in welcher der Methanolgehalt 25 Gew.-% betrug. Diese Masse wurde weitere 2 h im Kneter verdichtet und dann in einer Strangpresse zu 1 mm-Strängen verformt. Die erhaltenen Stränge wurden bei 120 °C 16 h lang getrocknet und dann bei 500 °C 5 h lang calciniert.

### Beispiel 3:

Eine Menge von 15 g des Katalysators aus Beispiel 2 wurde für die Dauer von 3 Stunden auf 500 °C erhitzt und in einem Exsikkator unter Feuchtigkeitsausschluß abgekühlt.

In 250 ml wasserfreiem Ethanol wurden 1,9 g 3-Aminopropyltriethoxysilan gelöst und die erkalteten Katalysatorstränge in einem abgeschlossenen Rührkolben hinzugefügt. Für die Dauer von 10 Stunden wurde der Ansatz bei geringer Drehzahl durchmischt.

Anschließend wurden das Lösungsmittel abgedampft und die Katalysatorstränge bei 550°C innerhalb von 6 Stunden unter Luft calciniert. Die durch die Modifikation erreichte Gewichtszunahme, auf das Ausgangsmaterial bezogen, betrug 2 %.

### Beispiel 4:

Die Katalysatoren aus Beispiel 2 (unmodifiziert) und Beispiel 3 (erfindungsgemäß) wurden in der Epoxidation von Propen mit Wasserstoffperoxid gegeneinander verglichen.

Dazu wurden jeweils 14 g der Katalysatorstränge in einen Rohrreaktor eingebaut. Bei 40 °C wurde stündlich eine Mischung aus 7,6 g Wasserstoffperoxid (40 Gew.-%) in 43 g Methanol und 7,3 g Propen über die Katalysatoren gefahren.

Die Reaktionsausträge nach dem Reaktor wurden gaschromatographisch (Säule: Stabilwax-Carbowax) analysiert.

Die nachfolgende Tabelle 1 zeigt das unterschiedliche Verhalten in der Selektivität beider Katalysatoren hinsichtlich der unerwünschten Nebenprodukte wie Methoxypropanole und Propandiol, bei ansonsten gleicher Bildung von Propylenoxid.

**Tabelle 1**

| **Katalysator** | **Laufzeit / h** | **Propylenoxid / Gew.-%** | **Methoxy- propanole / ppm** | **Propandiol / ppm** |
|---|---|---|---|---|
| Bsp. 2 | 123 | 7,4 | 3300 | 400 |
| Bsp. 2 | 192 | 7,6 | 3300 | 700 |
| Bsp. 2 | 290 | 7,4 | 3100 | 400 |
| Bsp.2 | 411 | 7,3 | 3700 | n.b. |
| Bsp. 2 | 507 | 7,1 | 3800 | 600 |
| | | | | |
| Bsp. 3 | 121 | 7,2 | 1900 | 300 |
| Bsp. 3 | 194 | 7,5 | 3100 | 300 |
| Bsp. 3 | 287 | 7,6 | 3000 | n.b. |
| Bsp. 3 | 385 | 7,0 | 1700 | 300 |
| Bsp. 3 | 481 | 7,0 | 3200 | 500 |

### Beispiel 5: Vergleich der mechanischen Stabilität

20 gemäß Beispiel 2 (Vergleichsbeispiel) hergestellte 1 mm-Stränge aus TS-1 sowie 20 gemäß Beispiel 3 hergestellte erfindungsgemäße 1 mm-Stränge aus TS-1 wurden bezüglich ihrer Seitendruckfestigkeit überprüft. Die Ergebnisse sind in der folgenden Tabelle 2 aufgeführt.

**Tabelle 2**

| | **Unmodifizierte Stränge** | **Erfindungsgemäße Stränge** |
|---|---|---|
| **Seitendruckfestigkeit / N (Mittelwert)** | 10,8 | 16,7 |

## Patentansprüche

1. Verfahren zur Herstellung eines Oxids umfassend mindestens die Elemente Si und Ti, mindestens nicht-kristallines Siliciumdioxid und mindestens eine kristalline Silikatphase, die mindestens eine Zeolithstruktur aufweist, wobei nicht-kristallines Siliciumdioxid auf mindestens einer kristallinen Silikatphase, die mindestens eine Zeolithstruktur aufweist, aufgebracht ist, **dadurch gekennzeichnet, daß**
(a) ein oxidisches Material, umfassend mindestens die Elemente Si und Ti und mindestens eine kristalline Silikatphase, die mindestens eine Zeolithstruktur aufweist, hergestellt wird und
(b) das aus (a) erhaltene oxidische Material
(i) in mindestens einem Lösungsmittel umgesetzt wird mit mindestens einem Silan oder mindestens einem Silanderivat oder mit einem Gemisch aus zwei oder mehr davon unter Erhalt einer Mischung, umfassend mindestens ein oxidisches Umsetzungsprodukt und das mindestens eine Lösungsmittel, aus der Mischung direkt im Anschluß an die Umsetzung das mindestens eine Lösungsmittel unter Erhalt des mindestens einen oxidischen Umsetzungsproduktes entfernt wird und direkt im Anschluß an die Entfernung des mindestens einen Lösungsmittels das mindestens eine oxidische Umsetzungsprodukt unter Erhalt des Oxides calciniert wird, oder
(ii) in der Gasphase umgesetzt wird mit mindestens einem Silan oder mindestens einem Silanderivat oder mit einem Gemisch aus zwei oder mehr davon unter Erhalt mindestens eines oxidischen Umsetzungsproduktes,
und direkt im Anschluß an die Umsetzung das mindestens eine oxidische Umsetzungsprodukt unter Erhalt des Oxides calciniert wird,
so daß das Oxid keine Silicium-Kohlenstoff-Bindungen aufweist, und wobei das mindestens eine Silan oder das mindestens eine Silanderivat mindestens eine Silicium-Kohlenstoff-Bindung enthält .

2. Verfahren nach Anspruch 1, **dadurch gekennzeichnet, daß** die mindestens eine kristalline Silikatphase mindestens eine Zeolithstruktur der Gruppe, insbesondere die Typen mit röntgenografischer Zuordnung zur ABW-, ACO-, AEI-, AEL-, AEN-, AET-, AFG-, AFI-, AFN-, AFO-, AFR-, AFS-, AFT-, AFX-, AFY-, AHT-, ANA-, APC-, APD-, AST-, ATN-, ATO-, ATS-, ATT-, ATV-, AWO-, AWW-, BEA-, BIK-, BOG-, BPH-, BRE-, CAN-, CAS-, CFI-, CGF-, CGS-, CHA-, CHI-, CLO-, CON-, CZP-, DAC-, DDR-, DFO-, DFT-, DOH-, DON-, EAB-, EDI-, EMT-, EPI-, ERI-, ESV-, EUO-, FAU-, FER-, GIS-, GME-, GOO-, HEU-, IFR-, ISV-, ITE-, JBW-, KFI-, LAU-, LEV-, LIO-, LOS-, LOV-, LTA-, LTL-, LTN-, MAZ-, MEI-, MEL-, MEP-, MER-, MFI-, MFS-, MON-, MOR-, MSO-, MTF-, MTN-, MTT-, MTW-, MWW-, NAT-, NES-, NON-, OFF-, OSI-, PAR-, PAU-, PHI-, RHO-, RON-, RSN-, RTE-, RTH-, RUT-, SAO-, SAT-, SBE-, SBS-, SBT-, SFF-, SGT-, SOD-, STF-, STI-, STT-, TER-, THO-, TON-, TSC-, VET-, VFI-, VNI-, VSV-, WIE-, WEN-, YUG-, ZON-Struktur sowie zu Mischstrukturen aus zwei oder mehr der vorgenannten Strukturen, aufweist.

3. Verfahren nach Anspruch 1 oder 2, **dadurch gekennzeichnet, daß** es mindestens eines der Elemente aus der Gruppe, bestehend aus Al, B, Fe, Ga, V, Zr, Ge, Sn, Zn, Te, Nb, Ta und Cr, umfaßt.

4. Verfahren nach einem der Ansprüche 1 bis 3, **dadurch gekennzeichnet, daß** aus der in (i) hergestellten Mischung das mindestens eine Lösungsmittel entweder durch Temperaturerhöhung oder durch Druckerniedrigung oder durch sowohl Temperaturerhöhung als auch Druckemiedrigung entfernt wird.

5. Verfahren nach einem der Ansprüche 1 bis 4, **dadurch gekennzeichnet, daß** das mindestens eine Lösungsmittel bei einer Temperatur entfernt wird, bei der sosowohl das mindestens eine Lösungsmittel entfernt als auch das mindestens eine oxidische Umsetzungsprodukt calciniert wird.

6. Verfahren nach einem der Ansprüche 1 bis 5, **dadurch gekennzeichnet, daß** die Calcinierung bei Temperaturen von mehr als 200 °C in Anwesenheit von Sauerstoff stattfindet.

7. Verfahren nach einem der Ansprüche 1 bis 6, **dadurch gekennzeichnet, daß** ein oxidisches Material in Form eines Formkörpers, hergestellt aus Titansilikalit der TS-1-Struktur und Siliciumdioxidbinder, mit 3-Aminopropyltriethoxysilan, gelöst in einem geeigneten wasserfreien Lösungsmittel, umgesetzt wird.

## Claims

1. A process for preparing an oxide comprising at least the elements Si and Ti, at least noncrystalline silicon dioxide and at least one crystalline silicate phase which has at least one zeolite structure, with noncrystalline silicon dioxide being applied to at least one crystalline silicate phase having at least one zeolite structure, wherein
(a) an oxidic material comprising at least the elements Si and Ti and at least one crystalline silicate phase having at least one zeolite structure is prepared and
(b) the oxidic material obtained from (a)
(i) is reacted with at least one silane or at least one silane derivative or with a mixture of two or more thereof in at least one solvent to give a mixture comprising at least one oxidic reaction product and the solvent or solvents,
the solvent or solvents is/are removed from the mixture directly subsequent to the reaction to give the oxidic reaction product or products and
the oxidic reaction product or products is/are calcined directly subsequent to the removal of the solvent or solvents to give the oxide, or
(ii)is reacted in the gas phase with at least one silane or at least one silane derivative or with a mixture of two or more thereof to give at least one oxidic reaction product
and the oxidic reaction product or products is/are calcined directly subsequent to the reaction to give the oxide,
so that the oxide has no silicon-carbon bonds, and the silan or silanes or the silane derivative or derivatives contain(s) at least one silicon-carbon bond.

2. A process as claimed in claim 1, wherein the crystalline silicate phase or phases has/have at least one zeolite structure selected from the group consisting of structures assigned X-ray-crystalographically to the ABW, ACO, AEI, AEL, AEN, AET, AFG, AFI, AFN, AFO, AFR, AFS, AFT, AFX, AFY, ART, ANA, APC, APD, AST, ATN, ATO, ATS, ATT, ATV, AWO, AWW, BEA, BIK, BOG, BPH, BRE, CAN, CAS, CFI, CGF, CGS, CHA, CHI, CLO, CON, CZP, DAC, DDR, DFO, DFT, DOH, DON, EAB, EDI, EMT, EPI, ERI, ESV, EUO, FAU, PER, GIS, GME, GOO, HEU, IFR, ISV, ITE, JBW, KFI, LAU, LEV, LIO, LOS, LOV, LTA, LTL, LTN, MAZ, MEI, MEL, MEP, MER, MFI, MFS, MON, MOR, MSO, MTF, MTN, MTT, MTW, MWW, NAT, NES, NON, OFF, OSI, PAR, PAU, PHI, RHO, RON, RSN, RTE, RTH, RUT, SAO, SAT, SBE, SBS, SBT, SFF, SGT, SOD, STF, STI, STT, TER, THO, TON, TSC, VET, VFI, VNI, VSV, WIE, WEN, YUG and ZON structures and to mixed structures made up of two or more of the abovementioned structures.

3. A process as claimed in claim 1 or 2 comprising at least one element selected from the group consisting of Al, B, Fe, Ga, V, Zr, Ge, Sn, Zn, Te, Nb, Ta and Cr.

4. A process as claimed in any of claims 1 to 3, wherein the solvent or solvents is/are removed from the mixture prepared in (i) either by increasing the temperature or by lowering the pressure or by increasing the temperature and reducing the pressure.

5. A process as claimed in any of claims 1 to 4, wherein the solvent or solvents is/are removed at a temperature at which the solvent or solvents is/are removed and the oxidic reaction product or products is/are also calcined.

6. A process as claimed in any of claims 1 to 5, wherein the calcination takes place at above 200°C in the presence of oxygen.

7. A process as claimed in any of claims 1 to 6, wherein an oxidic material in the form of a shaped body produced from titanium silicalite of the TS-1 structure and silicon dioxide binder is reacted with 3-aminopropyltriethoxysilane dissolved in a suitable anhydrous solvent.

## Revendications

1. Procédé pour la préparation d'un oxyde comprenant au moins les éléments Si et Ti, au moins du dioxyde de silicium non cristallin et au moins une phase cristalline de silicate, qui présente au moins une structure zéolithe, le dioxyde de silicium non cristallin étant appliqué sur au moins une phase cristalline de silicate, qui présente au moins une structure zéolithe, **caractérisé en ce que**
(a) un matériau oxyde, comprenant au moins les éléments Si et Ti et au moins une phase cristalline de silicate, qui présente au moins une structure zéolithe est préparé et
(b) le matériau oxyde obtenu dans (a)
(i) est transformé dans au moins un solvant avec au moins un silane ou au moins un dérivé de silane ou avec un mélange de deux ou plus de ceux-ci de manière à obtenir un mélange comprenant au moins un produit de transformation oxyde et ledit au moins un solvant, ledit au moins un solvant est éliminé du mélange directement après la transformation de manière à obtenir ledit au moins un produit de transformation oxyde et ledit au moins un produit de transformation oxyde est calciné directement après l'élimination dudit au moins un solvant de manière à obtenir un oxyde ou
(ii) est transformé en phase gazeuse avec au moins un silane ou au moins un dérivé du silane ou avec un mélange de deux ou plus de ceux-ci de manière à obtenir au moins un produit de transformation oxyde et ledit au moins un produit de transformation oxyde est calciné directement après la transformation de manière à obtenir un oxydé
de telle manière que l'oxyde ne présente pas de liaisons silicium-carbone et ledit le au moins un silane ou le au moins un dérivé de silane contenant au moins une liaison silicium-carbone.

2. Procédé selon la revendication 1, **caractérisé en ce que** ladite au moins une phase cristalline de silicate présente au moins une structure zéolithe du groupe, en particulier les types pouvant être attribués selon leur spectre de rayons X à la structure ABW, ACO, AEI, AEL, AEN, AET, AFG, AFI, AFN, AFO, AFR, AFS, AFT, AFX, AFY, AHT, ANA, APC, APD, AST, ATN, ATO, ATS, ATT, ATV, AWO, AWW, BEA, BIK, BOG, BPH, BRE, CAN, CAS, CFI, CGF, CGS, CHA, CHI, CLO, CON, CZP, DAC, DDR, DFO, DFT, DOH, DON, EAB, EDI, EMT, EPI, ERI, ESV, EUO, FAU, FER, GIS, GME, GOO, HEU, IFR, ISV, ITE, JBW, KFI, LAU, LEV, LIO, LOS, LOV, LTA, LTL, LTN, MAZ, MEI, MEL, MEP, MER, MFI, MFS, MON, MOR, MSO, MTF, MTN, MTT, MTW, MWW, NAT, NES, NON, OFF, OSI, PAR, PAU, PHI, RHO, RON, RSN, RTE, RTH, RUT, SAO, SAT, SBE, SBS, SBT, SFF, SGT, SOD, STF, STI, STT, TER, THO, TON, TSC, VET, VFI, VNI, VSV, WIE, WEN, YUG, ZON ainsi que les structures mixtes de deux structures susmentionnées ou plus.

3. Procédé selon la revendication 1 ou 2, **caractérisé en ce qu'**il comprend au moins un des éléments du groupe constitué par Al, B, Fe, Ga, V, Zr, Ge, Sn, Zn, Te, Nb, Ta et Cr.

4. Procédé selon l'une quelconque des revendications 1 à 3, **caractérisé en ce qu'**on élimine du mélange préparé dans (i) ledit au moins un solvant soit par augmentation de température ou soit par diminution de pression ou par augmentation de température et diminution de pression.

5. Procédé selon l'une quelconque des revendications 1 à 4, **caractérisé en ce que** ledit au moins un solvant est éliminé à une température à laquelle et ledit au moins un solvant est éliminé et ledit au moins un produit de transformation oxyde est calciné.

6. Procédé selon l'une quelconque des revendications 1 à 5, **caractérisé en ce que** la calcination est réalisée à des températures de plus de 200°C en présence d'oxygène.

7. Procédé selon l'une quelconque des revendications 1 à 6, **caractérisé en ce qu'**on transforme un matériau oxyde sous forme d'un corps façonné constitué par du silicalite de titane de structure TS-1 et un liant dioxyde de silicium avec du 3-aminopropyltriéthoxysilane, dissous dans un solvant anhydre approprié.
